# EUROPEAN PATENT SPECIFICATION

(11) **EP 3 515 971 B1**
(45) Date of publication and mention of the grant of the patent: **13.04.2022**
(21) Application number: 17851960.9
(22) Date of filing: 19.12.2017
(51) Int. Cl.: C08J 3/11, C08J 11/08, C09D 125/06, C08K 3/013

(54) **PROCESS FOR FABRICATION OF PAINTS BASED ON EXPANDED POLYSTYRENE (EPS) WASTE**
VERFAHREN ZUR HERSTELLUNG VON LACKEN AUF DER BASIS VON ABFÄLLEN VON EXPANDIERTEM POLYSTYROL (EPS)
PROCÉDÉ DE FABRICATION DE PEINTURES À BASE DE DÉCHETS DE POLYSTYRÈNE EXPANSÉ (EPS)

(30) Priority: 04.01.2017 CL 13 201700
(43) Date of publication of application: 31.07.2019
(73) Proprietor: Acuña Rougier, Cristina Lucía, Santiago 7600652 (CL); Cifuentes Eaglehurst, Constanza Catalina De Lourde, Santiago 7760129 (CL)
(72) Inventor: Acuña Rougier, Cristina Lucía, Santiago 7600652 (CL); Cifuentes Eaglehurst, Constanza Catalina De Lourde, Santiago 7760129 (CL)
(74) Representative: Clarke Modet & Co.
(86) International application number: PCT/IB2017/058127
(87) International publication number: WO 2018/127755

(56) References cited:
- CN-B- 103 305 069
- DE-A1- 4 307 677
- DE-A1- 10 328 312
- KR-A- 20030 034 976

## Description

### FIELD OF THE INVENTION

The invention is related with the paint industry to use on surfaces. The invention is a process to obtain paints using expanded polystyrene (EPS) waste as a raw material. From this technology we pursue to transform a waste into a useful product, saving resources and at the same time contributing to solve environmental contamination problems.

### BACKGROUND OF THE INVENTION

EPS is an oil derived polymer with a number of applications in food, packing construction and other industries due to its economic advantages, low water absorption, harmlessness, inalterability and due to its inert nature. However, due to its fragility and low density, it generates large amounts of waste which has raised the concern of authorities, general population and complains of environmentalists. In Chile, 400.000 Kg of industrial EPS waste is generated each year, this does not include the household EPS waste which is disposed of at landfills, because processes to recycle it do not yet exist. Nowadays there are two options for final EPS waste disposition: one is to export it to China or Argentina where this waste is reused to obtain products like photo frames or school tools (http://www.mastropor.com.ar/reciclado.html), and the other option is its final disposition at landfills.

From the state of the art the following documents can be cited.

DE3426449 discloses the use of polystyrene foam packaging material which has been thrown away after its use and is suitable for the preparation of surface coating materials and enamel paints. However, this document does not claim at the same conditions of the present invention, which means it does not claim neither the same stages nor materials.

US2007249741 discloses a method using dissolved EPS to obtain a coating material but not paint).

DE437677A1 describes the utilisation of foamed polystyrene waste (EPS) as paints wherein the waste EPS is dissolved in organic solvents, the solution is filtered by conventional filtration methods and the solution is used to formulate paints.

DE10328312A1 discloses the use of polystyrene foam (Styropor) to give lacquers or paints by first dissolving the scrap EPS in an organic solvent such as benzene, toluene, xylene, cyclohexanone and then adding a pigment to obtain the paint.

CN103305069B reveals a process wherein waste polystyrene foam is dissolved in toluene to form a toluene solution of polystyrene. Then titanium dioxide and a dispersion agent are added under high velocity stirring in order to obtain the paint.

KR20030034976A discloses a liquid paint which is prepared by mixing 20-30 wt.% of pulverized waste Styrofoam, 50-60 wt.% of methyl chloride which dissolves the waste stryrofoam, 10-20 wt.% of xylene and 5-10 wt.% of toluene with stirring at room temperature for 18-28 hours. The liquid paint comprises a pigment.

### SOLUTION TO THE TECHNICAL PROBLEM

The present invention solves the problem of EPS waste disposal, by transforming it into a product, more specifically a paint product, with non-obvious properties like glossiness and impermeability to water. The paint is a material that can be used in a wide variety of surfaces such as concrete, asphalt, pavement and plasterboard, among others; therefore, it is a necessary product in homes and all kinds of industries.

Additionally, it is known that EPS has the problem of having a large volume (volume/mass ratio), which has the implication of expensive transportation costs and the use of large spaces in landfills, which has the additional consequence of an expensive final disposition.

### DESCRIPTION OF THE INVENTION

The present invention relates to a process to obtain paints using expanded polystyrene (EPS) waste as a raw material, which is also known as styrofoam.

In a first aspect, the present invention refers to a process to fabricate a paint from expanded polystyrene (EPS) waste, wherein the process has the following steps:
a) mixing the EPS waste with an organic solvent until reaching a mixture with a concentration between 20% and 80% w/w;
b) decanting impurities of the mixture obtained in stage (a) from 24 to 120 h;
c) collecting the supernatant obtained in stage (b);
d) dispersing a pigment in the supernatant obtained in stage (c) from 10 to 30 min at a speed between 1.000 rpm and 2.000 rpm;
e) mixing a substance obtained in stage (d) with an organic solvent at a speed between 300 rpm and 1.000 rpm until reaching the desired concentration.

In a second aspect, during the dispersion of step (d), a dispersing agent is added in a concentration between 0,5% and 5,0% of the final composition, an organic solvent in a concentration between 70% and 40% of the final composition, and a pigment in a concentration between 10% and 40% of the final composition in a dispersing machine.

In a third aspect, the dispersing agent can be chosen among soy lecithin, heavy fraction hydrodesulfure, polyacrylates and nafta.

Due to the process using EPS waste as a raw material, it is necessary to eliminate the solid particles and dust that contaminates it, which is done in stage (b) during the decantation process.

In a fourth aspect, the organic solvent is selected from the group consisting of a ketone up to 11 saturated carbon atoms, an ester up to 11 saturated carbon atoms, a substituted benzene up to 12 saturated carbon atoms and an alkane up to 15 saturated carbon atoms, pure or mixtures thereof.

Specifically, the organic solvent used in the present invention, is selected from the group consisting of propanone, 2-butanone, 2-pentanone, 3-pentanone, 2-hexanone, 3-hexanone, 2-heptanone, 3-heptanone, 4-hectanone, 2-octanone, 3-octanote, 4-octanone, 2-nonanone, 3-nonanone, 4-nonanone, 5-nonanone, 2-decanone, 3-decanone, 4-decanone, 5-decanone, 2-undecanone, 3-undecanone, 4-undecanone, 5-undecanone, 6-undecanone, 2,4-pentadione, 2,5-hexanodione, 2,4-heptanodione, 2,5-heptanodiones, 2,6-heptanodione, 3,5-heptanodione, 3,6-heptanodione, methyl ethanoate, ethyl ethanoate, propyl ethanoate, isopropyl ethanoate, butyl ethanoate, isobutyl ethanoate, secbutyl ethanoate, tertbutyl ethanoate, pentyl ethanoate, methylbutyl ethanoate, 2-methylbutyl ethanoate, 3-methylbutyl ethanoate, 1,2-dimethylpropyl ethanoate, 2-ethylpropyl ethanoate, hexyl ethanoate, methyl pentyl ethanoate, 2-methylpentyl ethanoate, 3-methylpentyl ethanoate, 4-methylpentyl ethanoate, ethyl butyl ethanoate, 2-etylbutyl ethanoate, 3-ethylbutyl ethanoate, methyl propanoate, ethyl propanoate, propyl propanoate, isopropyl propanoate, butyl propanoate, isobutyl propanoate, secbutyl propanoate, tertbutyl propanoate, pentyl propanoate, methyl butyl propanoate, 2-methylbutyl propanoate, 3-methylbutyl propanoate, 1,2-dimethylpropyl propanoate, 2-ethylpropyl propanoate, hexyl propanoate, methyl pentyl propanoate, 2-methylpentyl propanoate, 3-methylpenthyl propanoate, 4-methylpentyl propanoate, ethyl butyl propanoate, 2-ethylbutyl propanoate, 3-ethylbutyl propanoate, pentane, 2-methylpentane, 3-methylpentane, hexane, 2-methylhexane, 3-methylhexane, heptane, 2-methylheptane, 3-methylheptane, 4-methylheptane, octane, 2-methyloctane, 3-methyloctane, 4-methyloctane, nonane, 2-methylnonane, 3-methylnonane, 4-methylnonane, 5-methylnonane, decane, 2-methyldecane, 3-methyldecane, 4-methyldecane, 5-methyldecane, 2-ethylpentane, 3-ethylpentane, 2-ethylhexane, 3-ethylhexane, 2-ethylheptane, 3-ethylheptane, 4-ethylheptane, 2-ethyloctane, 3-ethyloctane, 4-ethyloctane, 2-ethylnonane, 3-ethylnonane, 4-ethylnonane, 5-ethylnonane, 2-ethyldecane, 3-ethyldecane, 4-ethyldecane, 5-ethyldecane, benzene, toluene, xylene, trimethylbenzene, ethylbenzene, diethyl benzene, prophylbenzene, diprophylbenzene, chloroform, dichloromethane, gasolines, kerosene and carbon tetrachloride and mixtures thereof.

Preferably, the organic solvent is selected from the group consisting of acetone, xylene, ethyl acetate, toluene, hexane and mixtures thereof.

In a fifth aspect, in the present invention the pigment is selected from titanium dioxide (TiO₂), monocyclic cadmium sulfide, lead chromate, iron oxide monohydrate, anhydrous iron oxide, chromic oxide and ferric hexacyanoferrate. Pigments are powder solid substances, and its function is coloring, to give opacity and in other cases to give corrosion resistance or mechanical resistance.

This process is carried out at a temperature between 15 and 30°C.

In a final aspect, the present invention refers to a paint product obtained through the process of the present invention. The paint has a pigment concentration between 10% to 40%, EPS concentration between 70% to 1%, dispersant concentration between 0,5% to 5,0% and the difference is a solvent.

The paint obtained through the process of the present invention has the properties of being glossy and waterproof. Commonly, commercial glossy oil has the following properties: 89,2% of water impermeability and a glossiness of about 20,84 BU (on plasterboard), which means that the product obtained through this invention has a better performance as shown in examples 1 and 2. Since this product is made from waste raw material, these properties could not have been inferred from the previous divulged information. ASTM D 523.14 and DIN 18180 were employed to measure glossiness and impermeability.

### EXAMPLES 1-6

Next are shown examples of this invention

### EXAMPLE 1

a. Mixing 46g of EPS waste with 42g of a xylene:ethyl acetate mixture (9:1 ratio) at 25°C.
b. The mixture obtained in stage (a) is left to stand at 25°C during 48h until decantation of the impurities.
c. At least 44g of the supernatant of the mixture obtained in stage (b) were separated from the impurities.
d. 16g of pigment (TiO₂) were dispersed in 44g of the stage (c) supernatant which was previously mixed with 1g of soy lecithin and 20g of a mixture of xylene:ethyl acetate (9:1 ratio). The dispersion and mixing was performed at 1.100 rpm during 15 min at 25°C in a BGD750/1 disperser.
e. Once stage (d) was finished, the obtained mixture was mixed with 19g of a mixture of xylene:ethyl acetate (9:1 ratio). The mixing was performed at 500 rpm during 10 min at 25°C.

Measured properties of the obtained product are as follows:
Water impermeability: 93,9% of water absorption reduction
Glossiness: 19,045 BU (measured on plasterboard)

### EXAMPLE 2

a. Mixing 46g of EPS waste with 42g of xylene at 25°C.
b. The mixture obtained in stage (a) is left to stand at 25°C during 48h until decantation of the impurities.
c. At least 44g of the supernatant of the mixture obtained in stage (b) were separated from the impurities.
d. 16g of pigment (TiO₂) were dispersed in 44g of the stage (c) supernatant which was previously mixed with 1g of soy lecithin and 20g of a mixture of xylene. The dispersion and mixing was performed at 1.100 rpm during 15 min at 25°C.
e. Once stage (d) was finished, the obtained mixture was mixed with 19g of xylene. The mixing was performed at 500 rpm during 10 min at 25°C.

Measured properties of the obtained product are as follows:
Water impermeability: 93,9% of water absorption reduction
Glossiness: 22,44 BU (measured on plasterboard)

### EXAMPLE 3

In another execution of this invention, and only as an example, ethyl acetate was replaced by hexane, employing the following conditions:
a. Mixing 46g of EPS waste with 42g of a xylene:hexane mixture (9:1 ratio) at 25°C.
b. The mixture obtained in stage (a) is left to stand at 25°C during 48h until decantation of the impurities.
c. At least 44g of the supernatant of the mixture obtained in stage (b) were separated from the impurities.
d. 16g of pigment (TiO₂) were dispersed in 44g of the stage (c) supernatant which was previously mixed with 1g of soy lecithin and 20g of a mixture of xylene:hexane (9:1 ratio). The dispersion and mixing was performed at 1.100 rpm during 15 min at 25°C in a BGD750/1 disperser.
e. Once stage (d) was finished, the obtained mixture was mixed with 19g of a mixture of xylene:hexane (9:1 ratio). The mixing was performed at 500 rpm during 10 min at 25°C.

Measured properties of the obtained product in this example are similar to the properties obtained to the products of examples 1 and 2.

### EXAMPLE 4

In another execution of this invention, and only as an example, ethyl acetate was replaced by methanol, employing the following conditions:
a. Mixing 46g of EPS waste with 42g of a xylene:methanol mixture (9:1 ratio) at 25°C.
b. The mixture obtained in stage (a) is left to stand at 25°C during 48h until decantation of the impurities.
c. At least 44g of the supernatant of the mixture obtained in stage (b) were separated from the impurities.
d. 16g of pigment (TiO₂) were dispersed in 44g of the stage (c) supernatant which was previously mixed with 1g of soy lecithin and 20g of a mixture of xylene:methanol (9:1 ratio). The dispersion and mixing was performed at 1.100 rpm during 15 min at 25°C in a BGD750/1 disperser.
e. Once stage (d) was finished, the obtained mixture was mixed with 19g of a mixture of xylene:methanol (9:1 ratio). The mixing was performed at 500 rpm during 10 min at 25°C.

Measured properties of the obtained product in this example are similar to the properties obtained to the products of examples 1 and 2.

### EXAMPLE 5

In another execution of this invention, and only as an example, ethyl acetate was replaced by acetone, employing the following conditions:
a. Mixing 46g of EPS waste with 42g of a xylene:acetone mixture (9:1 ratio) at 25°C.
b. The mixture obtained in stage (a) is left to stand at 25°C during 48h until decantation of the impurities.
c. At least 44g of the supernatant of the mixture obtained in stage (b) were separated from the impurities.
d. 16g of pigment (TiO₂) were dispersed in 44g of the stage (c) supernatant which was previously mixed with 1g of soy lecithin and 20g of a mixture of xylene:acetone (9:1 ratio). The dispersion and mixing was performed at 1.100 rpm during 15 min at 25°C in a BGD750/1 disperser.
e. Once stage (d) was finished, the obtained mixture was mixed with 19g of a mixture of xylene:acetone (9:1 ratio). The mixing was performed at 500 rpm during 10 min at 25°C.

Measured properties of the obtained product in this example are similar to the properties obtained to the products of examples 1 and 2.

### EXAMPLE 6

In another execution of this invention, and only as an example, ethyl acetate was replaced by toluene, employing the following conditions:
a. Mixing 46g of EPS waste with 42g of a xylene:toluene mixture (9:1 ratio) at 25°C.
b. The mixture obtained in stage (a) is left to stand at 25°C during 48h until decantation of the impurities.
c. At least 44g of the supernatant of the mixture obtained in stage (b) were separated from the impurities.
d. 16g of pigment (TiO₂) were dispersed in 44g of the stage (c) supernatant which was previously mixed with 1g of soy lecithin and 20g of a mixture of xylene:toluene (9:1 ratio). The dispersion and mixing was performed at 1.100 rpm during 15 min at 25°C in a BGD750/1 disperser.
e. Once stage (d) was finished, the obtained mixture was mixed with 19g of a mixture of xylene:toluene (9:1 ratio). The mixing was performed at 500 rpm during 10 min at 25°C.

Measured properties of the obtained product in this example are similar to the properties obtained to the products of examples 1 and 2.

## Claims

1. Process to fabricate a paint from expanded polystyrene (EPS) waste, wherein the process has the following steps:
a) mixing the EPS waste with an organic solvent until reaching a mixture with a concentration between 20% and 80% w/w;
b) decanting impurities of the mixture obtained in stage (a) from 24 to 120 h;
c) collecting the supernatant obtained in stage (b);
d) dispersing a pigment in the supernatant obtained in stage (c) from 10 to 30 min at a speed between 1.000 rpm and 2.000 rpm;
e) mixing a substance obtained in stage (d) with an organic solvent at a speed between 300 rpm and 1.000 rpm until reaching the desired concentration.

2. Process to fabricate a paint, according to claim 1, wherein the organic solvent in stage (a) is selected from the group consisting of a ketone up to 11 saturated carbon atoms, an ester up to 11 saturated carbon atoms, a substituted benzene up to 12 saturated carbon atoms and an alkane up to 15 saturated carbon atoms, pure or mixtures thereof.

3. Process to fabricate a paint, according to claim 2, wherein the organic solvent is selected from the group consisting of propanone, 2-butanone, 2-pentanone, 3-pentanone, 2-hexanone, 3-hexanone, 2-heptanone, 3-heptanone, 4-heptanone, 2-octanone, 3-octanote, 4-octanone, 2-nonanone, 3-nonanone, 4-nonanone, 5-nonanone, 2-decanone, 3-decanone, 4-decanone, 5-decanone, 2-undecanone, 3-undecanone, 4-undecanone, 5-undecanone, 6-undecanone, 2,4-pentadione, 2,4-hexanodiona, 2,5-hexanodione, 2,4-heptanodione, 2,5-heptanodiones, 2,6-heptanodione, 3,5-heptanodione, 3,6-heptanodione, methyl ethanoate, ethyl ethanoate, propyl ethanoate, isopropyl ethanoate, butyl ethanoate, isobutyl ethanoate, secbutyl ethanoate, tertbutyl ethanoate, pentyl ethanoate, methylbutyl ethanoate, 2-methylbutyl ethanoate, 3-methylbutyl ethanoate, 1,2-dimethylpropyl ethanoate, 2-ethylpropyl ethanoate, hexyl ethanoate, methylpentyl ethanoate, 2-methylpentyl ethanoate, 3-methylpentyl ethanoate, 4-methylpentyl ethanoate, ethylbutyl ethanoate, 2-etylbutyl ethanoate, 3-ethylbutyl ethanoate, methyl propanoate, ethyl propanoate, propyl propanoate, isopropyl propanoate, butyl propanoate, isobutyl propanoate, secbutyl propanoate, tertbutyl propanoate, pentyl propanoate, methylbutyl propanoate, 2-methylbutyl propanoate, 3-methylbutyl propanoate, 1,2-dimethylpropyl propanoate, 2-ethylpropyl propanoate, hexyl propanoate, methylpentyl propanoate, 2-methylpentyl propanoate, 3-methylpenthyl propanoate, 4-methylpentyl propanoate, ethylbutyl propanoate, 2-ethylbutyl propanoate, 3-ethylbutyl propanoate, pentane, 2-methylpentane, 3-methylpentane, hexane, 2-methylhexane, 3-methylhexane, heptane, 2-methylheptane, 3-methylheptane, 4-methylheptane, octane, 2-methyloctane, 3-methyloctane, 4-methyloctane, nonane, 2-methylnonane, 3-methylnonane, 4-methylnonane, 5-methylnonane, decane, 2-methyldecane, 3-methyldecane, 4-methyldecane, 5-methyldecane, 2-ethylpentane, 3-ethylpentane, 2-ethylhexane, 3-ethylhexane, 2-ethylheptane, 3-ethylheptane, 4-ethylheptane, 2-ethyloctane, 3-ethyloctane, 4-ethyloctane, 2-ethylnonane, 3-ethylnonane, 4-ethylnonane, 5-ethylnonane, 2-ethyldecane, 3-ethyldecane, 4-ethyldecane, 5-ethyldecane, benzene, toluene, xylene, trimethylbenzene, ethylbenzene, diethylbenzene, prophylbenzene, diprophylbenzene, chloroform, dichloromethane, gasolines, kerosene and carbon tetrachloride, and mixtures thereof.

4. Process to fabricate a paint according to claim 3, wherein the organic solvent is selected from the group consisting of acetone, xylene, ethyl acetate, toluene, hexane and mixtures thereof.

5. Process to fabricate a paint according to claim 1, wherein during the dispersion of step (d) a dispersing agent is added in a concentration between 0,5% and 5,0% of the final composition, an organic solvent in a concentration between 70% and 40% of the final composition, and a pigment in a concentration between 10% and 40% of the final composition in a dispersing machine.

6. Process to fabricate a paint according to claim 1, wherein the dispersing agent is selected from soy lecithin, heavy fraction hydrodesulfure, polyacrylates, nafta.

7. Process to fabricate a paint according to claim 1, wherein the pigment is selected from titanium dioxide (TiO₂), monocyclic cadmium sulfide, lead chromate, iron oxide monohydrate, anhydrous iron oxide, chromic oxide, ferric hexacyanoferrate.

8. Process to fabricate a paint according to claim 1, wherein the process is performed at a temperature between 15 and 30°C.

9. Paint obtained through the process of any of claims 1 to 8, wherein the paint has a pigment concentration between 10% to 40%, EPS concentration between 70% to 1%, dispersant concentration between 0,5% to 5,0%, and the difference is a solvent.

## Patentansprüche

1. Verfahren zur Herstellung eines Lacks aus Abfällen von expandiertem Polystyrol (EPS), wobei das Verfahren die folgenden Schritte umfasst:
a) Mischen des EPS-Abfalls mit einem organischen Lösungsmittel bis zum Entstehen eines Gemischs mit einer Konzentration von 20 % bis 80 % Massenanteil;
b) Dekantieren von Verunreinigungen des in Stufe (a) entstandenen Gemischs für einen Zeitraum von 24 bis 120 Stunden;
c) Auffangen des in Stufe (b) entstandenen Überstands;
d) Dispergieren eines Pigments in dem in Stufe (c) entstandenen Überstand für einen Zeitraum von 10 bis 30 Minuten bei einer Geschwindigkeit zwischen 1.000 U/min und 2.000 U/min;
e) Mischen der in Stufe (d) entstandenen Substanz mit einem organischen Lösungsmittel bei einer Geschwindigkeit zwischen 300 U/min und 1.000 U/min, bis zum Erreichen der gewünschten Konzentration.

2. Verfahren zur Herstellung eines Lacks nach Anspruch 1, wobei das organische Lösungsmittel in Stufe (a) ausgewählt ist aus der Gruppe bestehend aus einem Keton mit bis zu 11 gesättigten Kohlenstoffatomen, einem Ester mit bis zu 11 gesättigten Kohlenstoffatomen, einem substituierten Benzol mit bis zu 12 gesättigten Kohlenstoffatomen und einem Alkan mit bis zu 15 gesättigten Kohlenstoffatomen, und zwar in reiner Form oder als Gemisch davon.

3. Verfahren zur Herstellung eines Lacks, nach Anspruch 2, wobei das organische Lösungsmittel ausgewählt ist aus der Gruppe bestehend aus Propanon, 2-Butanon, 2-Pentanon, 3-Pentanon, 2-Hexanon, 3-Hexanon, 2-Heptanon, 3-Heptanon, 4-Heptanon, 2-Octanon, 3-Octanon, 4-Octanon, 2-Nonanon, 3-Nonanon, 4-Nonanon, 5-Nonanon, 2-Decanon, 3-Decanon, 4-Decanon, 5-Decanon, 2-Undecanon, 3-Undecanon, 4-Undecanon, 5-Undecanon, 6-Undecanon, 2, 4-Pentandion, 2,4-Hexandion, 2,5-Hexandion, 2,4-Heptandion, 2,5-Heptandione, 2,6-Heptandion, 3,5-Heptandion, 3,6-Heptandion, Methylacetat, Ethylacetat, Propylacetat, Isopropylacetat, Butylacetat, Isobutylacetat, sec-Butylacetat, tert-Butylacetat, Pentylacetat, Methylbutylacetat, 2-Methylbutylacetat, 3-Methylbutylacetat, 1,2-Dimethylpropylacetat, 2-Ethylpropylacetat, Hexylacetat, Methylpentylacetat, 2-Methylpentylacetat, 3-Methylpentylacetat, 4-Methylpentylacetat, Ethylbutylacetat, 2-Ethylbutylacetat, 3-Ethylbutylacetat, Methylpropanoat, Ethylpropanoat, Propylpropanoat, Isopropylpropanoat, Butylpropanoat, Isobutylpropanoat, sec-Butylpropanoat, tert-Butylpropanoat, Pentylpropanoat, Methylbutylpropanoat, 2-Methylbutylpropanoat, 3-Methylbutylpropanoat, 1,2-Dimethylpropylpropanoat, 2-Ethylpropylpropanoat, Hexylpropanoat, Methylpentylpropanoat, 2-Methylpentylpropanoat, 3-Methylpenthylpropanoat, 4-Methylpentylpropanoat, Ethylbutylpropanoat, 2-Ethylbutylpropanoat, 3-Ethylbutylpropanoat, Pentan, 2-Methylpentan, 3-Methylpentan, Hexan, 2-Methylhexan, 3-Methylhexan, Heptan, 2-Methylheptan, 3-Methylheptan, 4-Methylheptan, Octan, 2-Methyloctan, 3-Methyloctan, 4-Methyloctan, Nonan, 2-Methylnonan, 3-Methylnonan, 4-Methylnonan, 5-Methylnonan, Decan, 2-Methyldecan, 3-Methyldecan, 4-Methyldecan, 5-Methyldecan,2-Ethylpentan, 3-Ethylpentan, 2-Ethylhexan, 3-Ethylhexan, 2-Ethylheptan, 3-Ethylheptan, 4-Ethylheptan, 2-Ethyloctan, 3-Ethyloctan, 4-Ethyloctan, 2-Ethylnonan, 3-Ethylnonan, 4-Ethylnonan, 5-Ethylnonan, 2-Ethyldecan, 3-Ethyldecan, 4-Ethyldecan, 5-Ethyldecan, Benzol, Toluol, Xylol, Trimethylbenzol, Ethylbenzol, Diethylbenzol, Prophylbenzol, Diprophylbenzol, Chloroform, Dichlormethan, Benzine, Kerosin und Tetrachlorkohlenstoff sowie Gemische davon.

4. Verfahren zur Herstellung eines Lacks nach Anspruch 3, wobei das organische Lösungsmittel ausgewählt ist aus der Gruppe bestehend aus Aceton, Xylol, Ethylacetat, Toluol, Hexan und Gemischen davon.

5. Verfahren zur Herstellung eines Lacks nach Anspruch 1, wobei während der Dispersion von Schritt (d) ein Dispergiermittel in einer Konzentration zwischen 0,5 % und 5,0 % der Endzusammensetzung, ein organisches Lösungsmittel in einer Konzentration zwischen 70 % und 40 % der Endzusammensetzung und ein Pigment in einer Konzentration zwischen 10 % und 40 % der Endzusammensetzung in einer Dispergiermaschine zugegeben werden.

6. Verfahren zur Herstellung eines Lacks nach Anspruch 1, wobei das Dispergiermittel ausgewählt ist aus Sojalecithin, hydrodesulfurierter schwerer Fraktion, Polyacrylaten, Naphta.

7. Verfahren zur Herstellung eines Lacks nach Anspruch 1, wobei das Pigment ausgewählt ist aus Titandioxid (TiO₂), monozyklischem Kadmiumsulfid, Bleichromat, Eisenoxid-Monohydrat, wasserfreiem Eisenoxid, Chromoxid, Eisenhexacyanoferrat.

8. Verfahren zur Herstellung eines Lacks nach Anspruch 1, wobei das Verfahren bei einer Temperatur zwischen 15 und 30 °C durchgeführt wird.

9. Nach einem der Ansprüche 1 bis 8 hergestellter Lack, wobei der Lack eine Pigmentkonzentration zwischen 10 % und 40 %, eine EPS-Konzentration zwischen 70 % und 1 % und eine Dispergiermittelkonzentration zwischen 0,5 % und 5,0 % aufweist und die Differenz aus einem Lösungsmittel besteht.

## Revendications

1. Procédé de fabrication d'une peinture à base de déchets de polystyrène expansé (EPS), dans lequel le procédé comporte les étapes suivantes :
a) mélanger les déchets de PSE avec un solvant organique jusqu'à obtenir un mélange ayant une concentration comprise entre 20 % et 80 % p/p ;
b) décantation des impuretés du mélange obtenu à l'étape (a) de 24 à 120 h ;
c) recueillir le surnageant obtenu à l'étape (b) ;
d) disperser un pigment dans le surnageant obtenu dans l'étape (c) de 10 à 30 min à une vitesse comprise entre 1 000 tr et 2 000 tr ;
e) mélanger une substance obtenue à l'étape (d) avec un solvant organique à une vitesse comprise entre 300 tr/min et 1 000 tr/min jusqu'à atteindre la concentration souhaitée.

2. Procédé de fabrication d'une peinture, selon la revendication 1, dans lequel le solvant organique dans l'étape (a) est choisi dans le groupe constitué d'une cétone jusqu'à 11 atomes de carbone saturés, d'un ester jusqu'à 11 atomes de carbone saturés, d'un benzène substitué jusqu'à 12 atomes de carbone saturés et d'un alcane jusqu'à 15 atomes de carbone saturés, purs ou mélanges de ceux-ci.

3. Procédé de fabrication d'une peinture, selon la revendication 2, dans lequel le solvant organique est choisi dans le groupe constitué par la propanone, la 2-butanone, la 2-pentanone, la 3-pentanone, la 2-hexanone, la 3-hexanone, la 2-heptanone, la 3-heptanone, la 4-heptanone, la 2-octanone, la 3-octanote, la 4-octanone, la 2-nonanone, la 3-nonanone, 4-nonanone, 5-nonanone, 2-décanone, 3-décanone, 4-décanone, 5-décanone, 2-undécanone, 3-undécanone, 4-undécanone, 5-undécanone, 6-undécanone, 2, 4-pentadione, 2,4-hexanodione, 2,5-hexanodione, 2,4-heptanodione, 2,5-heptanodiones, 2,6-heptanodione, 3,5-heptanodione, 3,6-heptanodione, éthanoate de méthyle, éthanoate d'éthyle, éthanoate de propyle, éthanoate d'isopropyle, éthanoate de butyle, éthanoate d'isobutyle, éthanoate de secbutyle, éthanoate de tertbutyle, éthanoate de pentyle, éthanoate de méthylbutyle, éthanoate de 2-méthylbutyle, éthanoate de 3-méthylbutyle, éthanoate de 1,2-diméthylpropyle, éthanoate de 2-éthylpropyle, éthanoate d'hexyle, éthanoate de méthylpentyle, éthanoate de 2-méthylpentyle, éthanoate de 3-méthylpentyle, éthanoate de 4-méthylpentyle, éthanoate d'éthylbutyle, éthanoate de 2-etylbutyle, éthanoate de 3-éthylbutyle, propanoate de méthyle, propanoate d'éthyle, propanoate de propyle, propanoate d'isopropyle, propanoate de butyle, propanoate d'isobutyle, propanoate de secbutyle, propanoate de tertbutyle, propanoate de pentyle, propanoate de méthylbutyle, propanoate de 2-méthylbutyle, propanoate de 3-méthylbutyle, propanoate de 1,2-diméthylpropyle, propanoate de 2-éthylpropyle, propanoate d'hexyle, propanoate de méthylpentyle, propanoate de 2-méthylpentyle, propanoate de 3-méthylpenthyle, propanoate de 4-méthylpentyle, propanoate d'éthylbutyle, propanoate de 2-éthylbutyle, propanoate de 3-éthylbutyle, pentane, 2-méthylpentane, 3-méthylpentane, hexane, 2-méthylhexane, 3-méthylhexane, heptane, 2-méthylheptane, 3-méthylheptane, 4-méthylheptane, octane, 2-méthyloctane, 3-méthyloctane, 4-méthyloctane, nonane, 2-méthylnonane, 3-méthylnonane, 4-méthylnonane, 5-méthylnonane, décane, 2-méthyldécane, 3-méthyldécane, 4-méthyldécane, 5-méthyldécane, 2-éthylpentane, 3-éthylpentane, 2-éthylhexane, 3-éthylhexane, 2-éthylheptane, 3-éthylheptane, 4-éthylheptane, 2-éthyloctane, 3-éthyloctane, 4-éthyloctane, 2-éthylnonane, 3-éthylnonane, 4-éthylnonane, 5-éthylnonane, 2-éthyldécane, 3-éthyldécane, 4-éthyldécane, 5-éthyldécane, benzène, toluène, xylène, triméthylbenzène, éthylbenzène, diéthylbenzène, prophylbenzène, diprophylbenzène, chloroforme, dichlorométhane, essences, kérosène et tétrachlorure de carbone, et leurs mélanges.

4. Procédé de fabrication d'une peinture selon la revendication 3, dans lequel le solvant organique est choisi dans le groupe constitué par l'acétone, le xylène, l'acétate d'éthyle, le toluène, l'hexane et leurs mélanges.

5. Procédé de fabrication d'une peinture selon la revendication 1, dans lequel pendant la dispersion de l'étape (d), un agent dispersant est ajouté à une concentration comprise entre 0,5 % et 5,0 % de la composition finale, un solvant organique à une concentration comprise entre 70 % et 40 % de la composition finale, et un pigment à une concentration comprise entre 10 % et 40 % de la composition finale dans une machine à disperser.

6. Procédé de fabrication d'une peinture selon la revendication 1, dans lequel l'agent dispersant est choisi parmi la lécithine de soja, l'hydrodesulfure de fraction lourde, les polyacrylates, le nafta.

7. Procédé de fabrication d'une peinture selon la revendication 1, dans lequel le pigment est choisi parmi le dioxyde de titane (TiO₂), le sulfure de cadmium monocyclique, le chromate de plomb, l'oxyde de fer monohydraté, l'oxyde de fer anhydre, l'oxyde chromique, l'hexacyanoferrate ferrique.

8. Procédé de fabrication d'une peinture selon la revendication 1, dans lequel le procédé est réalisé à une température comprise entre 15 et 30 °C.

9. Peinture obtenue par le procédé de l'une quelconque des revendications 1 à 8, dans laquelle la peinture présente une concentration en pigments comprise entre 10 % et 40 %, une concentration en EPS comprise entre 70 % et 1 %, une concentration en dispersant comprise entre 0,5 % et 5,0 %, et la différence est un solvant.
